# EUROPÄISCHE PATENTSCHRIFT

(11) **EP 0 505 768 B1**
(45) Veröffentlichungstag und Bekanntmachung des Hinweises auf die Patenterteilung: **30.07.1997**
(21) Anmeldenummer: 92103586.1
(22) Anmeldetag: 02.03.1992
(51) Int. Cl.: C08K 3/08

(54) **Palladiumhaltige Polymerzusammensetzung sowie Verfahren zu ihrer Herstellung**
Palladium containing polymer composition and process for its preparation
Composition de polymère contenant du palladium et procédé pour leur préparation

(30) Priorität: 13.03.1991 DE 4108032
(43) Veröffentlichungstag der Anmeldung: 30.09.1992
(73) Patentinhaber: BAYER AG, 51368 Leverkusen (DE)
(72) Erfinder: Huggins, John M., Dr., W-5090 Leverkusen (DE); Wolfgarten, Achim, W-5000 Köln 40 (DE)

(56) Entgegenhaltungen:
- EP-A- 0 200 914
- DE-A- 1 297 669
- GB-A- 2 167 424
- Journal of Macromolecular Science, Chemistry vol. 13(6), 727-50 (1979) ; H. Hirai: Preparation of colloidal transition metals in polymers by reduction with alcohols or ethers
- WORLD PATENTS INDEX LATEST Derwent Publications Ltd., London, GB; AN 90-323392 & JP-A-2 229 268 (NICHIBI KK) 12. September 1990

## Beschreibung

Die vorliegende Erfindung betrifft neue palladiumhaltige Polymerzusammensetzungen, die durch eine sehr feindisperse Verteilung von metallischem Palladium gekennzeichnet sind, und das Verfahren zu ihrer Herstellung. Palladiumhaltige Polymerzusammensetzungen, die Polymere mit ungesättigten Gruppen enthalten, finden unter anderem als Wasserstoff-absorbierende Zusammensetzungen bei der Herstellung von Lichtwellenleiterkabeln Verwendung, um die Lichtwellenleiter-Fasern vor Wasserstoff zu schützen. Bekanntermaßen beeinflußt die Diffusion von Wasserstoff in die Lichtwellenleiter-Faser das Dämpfungsverhalten der Lichtwellenleiter negativ.

Wasserstoff-absorbierende Zusammensetzungen, bestehend aus ungesättigten organischen Polymeren oder ungesättigten Siliconpolymeren und Übergangsmetallen bzw. Übergangsmetallverbindungen als Hydrierungskatalysatoren wurden bereits bekannt (EP-A 200 914, GB-A 2 167 424). Ferner wurden Wasserstoff-absorbierende Zusammensetzungen auf Basis Wasserstoff-absorbierender Metalle oder Metallverbindungen beschrieben (DE-A 3 515 227, DE-A 3 515 228, FR-A 2 588 388, EP-A 217 066, GB-A 2 144 559).

Diese bekannten Wasserstoff-absorbierenden Zusammensetzungen haben jedoch einen oder mehrere Nachteile. Einige Zusammensetzungen setzen große Mengen an teuren Metallen oder Metallverbindungen, beispielsweise Gehalte von mindestens 0,2 Gew.-% Palladiumpulver, voraus. Andere sammensetzungen weisen nur mäßige Aktivitäten bei der Wasserstoffabsorption auf. Obwohl die Wasserstoffaufnahmekapazität von ungesättigte Gruppen aufweisenden Polymeren insgesamt im wesentlichen durch den Gehalt an ungesättigten Gruppen bestimmt ist, wird die Wirksamkeit solcher Wasserstoff-absorbierenden Zusammensetzungen bezüglich des Schutzes der Lichtwellenleiter-Fasern weitgehend durch die Anfangsgeschwindigkeit der Wasserstoffaufnahmefähigkeit bestimmt. Der Hauptteil des Wasserstoffs, der von den Wasserstoff-absorbierenden Verbindungen aufgenommen werden muß, ist nämlich bereits bei der Herstellung des Lichtwellenleiterkabels vorhanden. Später in das Kabel aus der Umgebung eindiffundierter Wasserstoff spielt demgegenüber nur eine untergeordnete Rolle. Hieraus resultiert der Wunsch der Technik nach Wasserstoff-absorbierenden Zusammensetzungen mit hoher Anfangsaktivität bei der Wasserstoffabsorption.

Die vorliegende Erfindung stellt nun unter anderem neue Wasserstoff-absorbierende Polymerzusammensetzungen zur Verfügung, die sich durch eine sehr hohe Aktivität bei der Wasserstoffabsorption auch bei sehr niedrigen Palladium-Gehalten auszeichnen. Diese hohe Aktivität wird auf die sehr feindisperse Verteilung des Palladiums im Polymer zurückgeführt. Es wurde gefunden, daß in den erfindungsgemäßen Polymerzusammensetzungen das metallische Palladium im kolloidaler Verteilung vorliegt, wobei erfindungsgemäß mindestens 50 Gew.-% des im Polymer vorhandenen Palladiums in Form kolloidaler Partikel mit einer Teilchengröße von unter 0,5 µm Durchmesser vorliegt. Vorzugsweise sollen mindestens 50 Gew.-% des Palladiums eine Teilchengröße von unter 0,2 µm Durchmesser aufweisen.

Das erfindungsgemäße Verfahren zur Herstellung der Palladium-haltigen Polymerzusammensetzungen besteht in der allgemeinsten Formulierung darin, daß in einer ersten Verfahrensstufe eine Palladiumverbindung mit dem Polymer vermischt wird und danach in einer zweiten Verfahrensstufe die in dem Polymer verteilte Palladiumverbindung zumindest teilweise zum metallischen Palladium reduziert wird. Ein besonderes Kennzeichen des erfindungsgemäßen Verfahrens besteht darin, daß in Abwesenheit von Wasser gearbeitet wird.

Die nach der zweiten Stufe erhaltene, kolloidal verteiltes Palladium enthaltene Polymerzusammensetzung, kann noch relativ hohe Palladium-Gehalte bis 50.000 ppm aufweisen und wird im allgemeinen noch nicht die für die Eignung der Polymerzusammensetzung als Wasserstoff-Absorptionsmittel notwendige Menge an ungesättigten Gruppen enthalten. Ein gewisser Gehalt an ungesättigten Gruppen, in dem in Stufe 1 eingesetzten Polymer scheint jedoch günstig für eine gleichmäßige Verteilung des Palladiums in dem Polymer zu sein. Ein zu hoher Gehalt an ungesättigten Gruppen behindert jedoch die Reduktion in der zweiten Stufe. Vorteilhaft beträgt der Gehalt an ungesättigten Gruppen des in Stufe 1 eingesetzten Polymers weniger als 0,2, besonders bevorzugt weniger als 0,1 mMol/g Polymer. Prinzipiell ist es möglich, das aus Stufe 2 erhaltene Produkt bereits als wasserstoffabsorbierende Polymerzusammensetzung einzusetzen, wenn entweder nur geringe Mengen Wasserstoff zu absorbieren sind oder Nachteile bei der Reduktion aufgrund hoher Gehalte an ungesättigten Gruppen in Kauf genommen werden können.

Erfindungsgemäß bevorzugt wird in einer dritten Verfahrensstufe die kolloidales Palladium enthaltende Polymerzusammensetzung schließlich in einem oder mehreren Schritten mit einem weiteren Polymer, das ungesättigte Gruppen enthält, vermischt, wodurch die zusammensetzung eine ausreichende Fähigkeit zur Wasserstoff-Absorption erhält.

Die dritte Verfahrensstufe kann zweckmäßigerweise unmittelbar vor der Herstellung des Lichtwellenleiterkabels im Betrieb des Kabelherstellers durchgeführt werden. Das in Stufe 2 erhaltene Produkt stellt damit ein wertvolles Vorprodukt für den Lichtwellenleiterbetrieb dar.

Die Palladium-haltigen Polymerzusammensetzungen aus Stufe 2 sollen flüssige Konsistenz aufweisen, damit die weitere Vermischung in Stufe 3 möglich ist. Ihre Viskosität kann 5 bis 2.000.000 mPa.s, bevorzugt jedoch zwischen 100 und 100.000 mPa.s betragen. (Viskositätsangaben beziehen sich jeweils auf eine Temperatur von 25°C). Die Wasserstoff-absorbierenden Polymerverbindungen aus Stufe 3 können Viskositäten zwischen 5 und 2.000.000 mPa.s, vorzugsweise 1.000 bis 1.000.000 mPa.s, aufweisen, damit diese für die Verarbeitung in Lichtwellenleiterkabeln geeignet sind. Durch geeignete Auswahl des Polymeren ist es möglich, die Viskosität an die jeweiligen betrieblichen Bedingungen des Kabelherstellers anzupassen.

Im Rahmen der vorliegenden Erfindung kann die Auswahl der Polymere auch so erfolgen, daß in der 3. Stufe eine vernetzbare Polymerzusammensetzung (ein Kautschuk) erhalten wird. Dabei können beide Komponenten für die netzungsreaktion während der 3. Stufe zugemischt werden oder eine Komponente bereits in der 1. Stufe vorhanden sein, wobei die 2. Komponente erst während der 3. Stufe zugemischt wird. Wesentlich ist, daß der Kautschuk einen ausreichenden Überschuß an ungesättigten Gruppen zur Wasserstoff-Absorption enthält, damit auch nach der Vernetzungsreaktion noch eine hinreichende Anzahl von Wasserstoff-absorbierenden Gruppen vorhanden ist.

Handelt es sich bei der Palladium-haltigen Polymerzusammensetzung um einen Kautschuk, kann nach der Umhüllung des Lichtwellenleiters mit dem Kautschuk eine netzungsreaktion durchgeführt werden, bzw. in Gegenwart eines Katalysators stattfinden.

Ein vorteilhaftes Verfahren zum Schutz von Lichtwellenleiter-Fasern kann darin bestehen, einen erfindungsgemäßen Palladium-haltigen Kautschuk einzusetzen und diesen in seiner viskosen Struktur zunächst zu belassen, um eine anfänglich hohe Wasserstoff-Absorption zu gewährleisten.

Aufgrund der begrenzten Lagerstabilität des Kautschuks würde dann erst allmählich die Vernetzungsreaktion einsetzen, so daß dann schließlich, wenn der Hauptteil des bei der Herstellung in das Kabel eingeschleusten bzw. entstehenden Wasserstoffs absorbiert ist, die Palladiumhaltige Polymerzusammensetzung als Elastomer vorliegt und zusätzlich einen mechanischen Schutz des Lichtwellenleiters gewährleistet.

Um eine gleichmäßige Durchmischung in der 3. Stufe zu erreichen, ist es zweckmäßig, das Mengenverhältnis zwischen dem in Stufe 1 eingesetzten Polymer zu dem in Stufe 3 eingesetzten Polymer im Bereich von 1:20 bis 1:3 zu wählen. Gegebenenfalls kann die Vermischung der Palladium-Verbindung mit dem ersten Polymer in Stufe 1 und die Zumischung des zweiten Polymers in Stufe 3 jeweils in mehreren Schritten erfolgen. Zur Erzielung einer gleichmäßigen Mischung ist in jedem Schritt ein Mengenverhältnis von 1:2 bis 1:10 als optimal anzusehen.

Erfindungsgemäß werden vorzugsweise Palladium (II)-Verbindungen der allgemeinen Formel PdX₂ eingesetzt, wobei X ausgewählt sein kann aus Cl, Br, O₂CR oder 2,4-Pentandionato-Gruppen und wobei R ein organischer Rest mit 1 bis 20 Kohlenstoffatomen ist. Beispiele sind Palladium(II)chlorid, Palladium(II)bromid, Palladium(II)acetat, Palladium(II)(2-ethylhexanoat) und Palladium(II)(2,4-pentandionat). Besonders bevorzugt sind Pd(II)-Verbindungen der Formel Pd(II)(O₂CR)₂.

Als in der ersten Verfahrensstufe einsetzbares Polymer können alle Polymere eingesetzt werden, die keinen negativen Einfluß auf den Lichtwellenleiter ausüben, die eine für die Vermischung in der 1. und in der 3. Stufe noch geeignete Viskosität aufweisen, und die bei der im Anschluß an die 1. Stufe durchzuführende Reduktion des Palladiums nicht hinderlich sind. Geeignet sind z.B. Polyolefine, die z.B. durch Homo- oder Copolymerisation von ethylenisch ungesättigten Kohlenwasserstoff-Verbindungen mit 2 bis 8 Kohlenstoffatomen erhalten wurden, z.B. durch Homo- und Copolymerisation von Polyethylen, Polypropylen, Ethylen/Propylen-Mischpolymerisate, Polyisobutylen. Geeignet sind ferner Silicon-Polymere, vorzugsweise Triorgano-endgestoppte Diorganopolysiloxane, wobei die Organo-Gruppen unabhängig voneinander Methyl, Ethyl, oder Phenyl sein können. Vorzugsweise können bereits die in der 1. Stufe eingesetzten Polymere eine gewisse Anzahl an ungesättigten Gruppen, wie Vinyl oder Allyl, enthalten.

Zum Lösen in der 1. Stufe können die genannten Palladium(II)-Verbindungen als solche mit dem Polymer vermischt werden. Je nach Verträglichkeit der Palladium(II)-Verbindung mit dem Polymeren kann es vorteilhaft sein, die Palladium(II)-Verbindung in einem inerten organischen Lösungsmittel zunächst zu lösen und dann mit den Polymeren zu vermischen. Geeignete Lösungsmittel sind Ether oder aliphatische, aromatische oder chlorierte Kohlenwasserstoffe, z.B. Toluol. Angestrebt wird eine möglichst innige Vermischung, um die Palladium-Verbindung in dem Polymer möglichst homogen zu lösen. Dabei kann es vorteilhaft sein, zur Verbesserung des Lösungsvermögens die Palladium(II)-Verbindung mit einer weiteren reaktionsfähigen Verbindung gemeinsam zu lösen. Als reaktionsfähige Verbindung zur Verbesserung des Lösungsvermögens werden vorzugsweise Verbindungen eingesetzt, die eine Carboxyl- oder primäre, sekundäre oder tertiäre Aminogruppe enthalten. Besonders bevorzugt sind aliphatische Carbonsäuren, wie 2-Ethylhexansäure oder dergleichen. Für den Fall, daß als Polymer ein Polysiloxan eingesetzt wird, sind auch aminofunktionelle Silane oder Siloxane mit mindestens einer funktionellen Gruppe geeignet, das Lösungsvermögen zu verbessern, z.B. Verbindungen der allgemeinen Formel 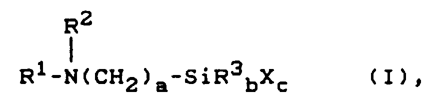 worin
- R¹ und R²: unabhängig voneinander Wasserstoff, Alkyl-, Cycloalkyl- oder Arylreste mit nicht mehr als 15 Kohlenstoffatomen,
und
- R³: Methyl oder Phenyl
oder
- X: Alkoxy bzw. O_{1/2}-Gruppen darstellen
und
- a: gleich 1 bis 4,
- b: gleich 0 bis 3, und
- c: gleich 3 minus b sind.

Nach Lösen der Palladium-Verbindung in dem Polymer wird in einer zweiten Verfahrensstufe die Palladium(II)-Verbindung zumindest teilweise zum metallischen Palladium reduziert. Die Reduktion kann dadurch erfolgen, daß das aus Stufe 1 erhaltene Polymergemisch einer Wasserstoffatmosphäre ausgesetzt wird. Zum Beispiel kann das Polymergemisch über mehrere Tage bei Raumtemperatur und Normaldruck der Wasserstoffatmosphäre ausgesetzt sein. Eine schnellere Reduktion wird erreicht, wenn das Polymer dem Wasserstoff unter erhöhtem Druck und gegebenenfalls unter Rühren ausgesetzt wird. Gegebenenfalls ist dann eine anschließende kurze Entgasung vorteilhaft. Als bevorzugtes Reduktionsmittel werden Si-H-Gruppen-haltige Silicone der allgemeinen Formel 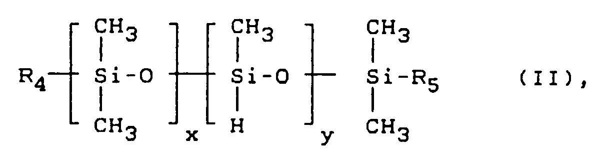 eingesetzt, wobei
- R₄ und R₅: unabhängig voneinander ein Wasserstoff oder Methylrest sind,
- x: zwischen Null und 300 und
- y: zwischen 1 und 300 liegt, und die Summe aus x und y zwischen 10 und 300 liegt.

Der Gehalt an Si-H-Gruppen in dem Silicon liegt vorzugsweise zwischen 0,05 und 16 mMol/g. Ferner können als duktionsmittel monomere Si-H-haltige Silane eingesetzt werden. Beispiele sind Tributylsilan, Triethylsilan, Trihexylsilan und dergleichen. Sofern in Stufe 1 organische Polymere, die nur schwer mit Siliconen mischbar sind, eingesetzt werden, können die Si-H-haltigen Silicone auch längerkettige Organoreste oder Phenylreste zur Verbesserung der Löslichkeit in dem organischen Polymer enthalten.

Die Si-H-haltige Verbindung kann dem Polymer auch bereits vor der Vermischung mit der Palladium(II)-Verbindung ohne Nachteil zugemischt werden. Die Si-H-haltige Verbindung wird in einer Menge von 0,5 bis 50, vorzugsweise 1 bis 30, Si-H-Äquivalenten je Mol Palladium(II)-Verbindung eingesetzt. Die Reduktion erfolgt bei Temperaturen von etwa 20°C bis unterhalb der Zersetzungstemperatur der Reaktionsteilnehmer. Vorzugsweise erfolgt die Reduktions-Reaktion bei leicht erhöhter Temperatur zwischen etwa 20 und 80°C, besonders bevorzugt zwischen 20 und 30°C.

Die Palladiumverbindung wird erfindungsgemäß bevorzugt in einer solchen Menge eingesetzt, daß sich ein Gehalt an metallischem Palladium in dem Polymer von 1 bis 50.000 ppm (Gewicht), besonders bevorzugt 10 bis 1.000 ppm ergibt.

Sofern die Lösung der Palladium-Verbindung in dem Polymer unter Einsatz eines Lösungsmittels erfolgt ist, wird das Lösungsmittel vorzugsweise entweder vor oder nach der Reduktion durch Verdampfen entfernt.

In der dritten Verfahrensstufe erfolgt nun die Vermischung des aus der zweiten Verfahrensstufe erhaltenen Palladium-haltigen Polymers mit dem ungestättigte Gruppen enthaltenden Polymer. Als ungesättigte Gruppen enthaltende Polymere sind Homo- und Copolymerisate von konjugierten Dienen geeignet. Solche ungesättigte Gruppen enthaltende Polymere können durch Polymerisation von Monomeren wie Butadien, Pentadien, Methylbutadien, Isopren und 2-Chlorbutadien erhalten werden. Copolymere werden vorzugsweise durch Polymerisation eines ersten Monomers, z.B. aus der Gruppe Butadien, Pentadien, Methylbutadien oder Chlorbutadien mit einem zweiten Monomer, z.B. aus der Gruppe Styren, 4-Vinylpyridin und Acrylonitril gewonnen werden. Geeignet sind auch Terpolymere, z.B. Butadien-styren-acrylonitrilterpolymere. Ebenfalls geeignet sind Pfropfpolymere der genannten Homo-, Co-und Terpolymere mit weiteren ungesättigten Gruppen, z.B. Divinyl-sulfon, Vinylcrotonat. Ferner geeignet ist Naturgummi. Wegen ihrer guten Gasdurchlässigkeit sowie der guten Fließeigenschaften über einen breiten Temperaturbereich sind ungesättigte Gruppen aufweisende Siliconpolymere besonders bevorzugt. Diese können aus cyclischen linearen oder verzweigten Strukturen und deren Kombinationen aufgebaut sein.

Die erfindungsgemäßen Siliconpolymere folgen vorzugsweise der allgemeinen Formel 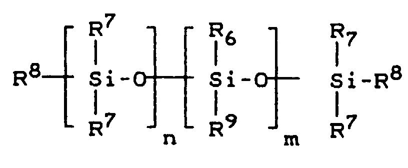 worin,
- R⁶ und R⁷: unabhängig voneinander Methyl, Ethyl oder Phenyl,
- R⁸ und R⁹: unabhängig voneinander Methyl, Vinyl, Allyl oder Phenyl,
- n =: 0 bis 2.000 und
- m =: 0 bis 1.000 und
- m + n =: 300 bis 2.000 sind.

Besonders bevorzugt werden Siliconpolymere der Formeln 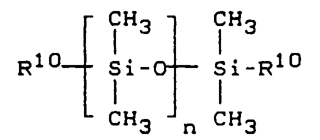 oder 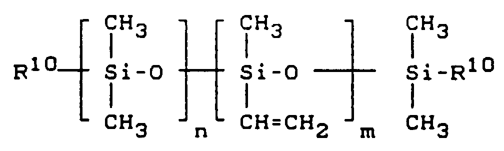 worin
- R¹⁰ =: Methyl oder Vinyl,
- n =: 0 bis 2.000 und
- m =: 1 bis 500 und
- n + m =: 300 bis 2.000 eingesetzt sind.

Die erfindungsgemäßen Polymere sind vorzugsweise flüssig. Bevorzugt sind Polymere mit Viskositäten im Bereich von 5 bis 2.000.000 mPa.s bei 25°C. Besonders bevorzugt sind Polymere mit Viskositäten im Bereich von 1.000 bis 100.000 mPa.s bei 25°C. Die erfindungsgemäßen Polymere können gesättigte oder ungesättigte Strukturen aufweisen. Jedoch muß das eingesetzte Polymergemisch ingesamt mindestens 0,2 mMol/100 g ungesättigte organische Gruppen aufweisen. Vorzugsweise wird die Palladium(II)-Verbindung in einem Polymer mit weniger als 10 mMol/100 g ungesättigte organische Gruppen gelöst. Weiteres ungesättigtes Polymer wird vorzugsweise dann nach der Reduktion beigemischt, um den Gehalt an ungesättigten Gruppen auf das gewünschte Niveau zu bringen. Bevorzugt sind Zusammensetzungen, die insgesamt 5 bis 300 mMol ungesättigte organische Gruppen pro 100 g Polymer aufweisen.

Anstelle von SiH-Verbindungen können auch (weniger bevorzugt) andere Reduktionsmittel, z.B. Metallhydride wie (C₂H₅)₂N.BH₃ oder Lithium tri-tert.-butoxyaluminiumhydrid eingesetzt werden, wenn diese für Einsatzzwecke nicht nachteilig sind.

Die in dieser Weise erhaltene Palladium-haltigen Zusammensetzungen weisen Aktivitäten bei der Wasserstoff-Absorption auf, die viel höher sind als die von sammensetzungen, die nur durch Zumischen von Palladiumpulver, auf inerten Feststoffen gestützte Palladium oder Palladium(II)-Verbindungen mit ungesättigten Polymeren hergestellt werden. Bei dem erfindungsgemäßen Verfahren wird die Palladium(II)-Verbindung in homogen gelöster Form reduziert. Dadurch entsteht eine hochdisperse Palladiumdispersion von besonderer Reaktivität.

Der Palladiumgehalt der Wasserstoff absorbierenden Polymere liegt unter 10.000 ppm, vorzugsweise im Bereich zwischen 30 und 500 ppm, besonders bevorzugt zwischen 50 und 300 ppm.

Die erfindungsgemäßen Palladium-haltigen Zusammensetzungen sind für die Anwendung in Lichtleiterkabeln geeignet. Je nach dem Palladiumgehalt sowie dem Gehalt an ungesättigten Gruppen erhält man unterschiedliche Geschwindigkeiten der Wasserstoff-Absorption. Bei dem erfindungsgemäßen Verfahren können jedoch mit sehr geringen Mengen an Palladium sehr hohe Aktivitäten erreicht werden, wie z.B. 400 bis 1.500 ml H₂/Mol Pd-sec. Die Gesamtmenge an Wasserstoff, die absorbiert wird, wird hauptsächlich von dem Gehalt an ungesättigten Gruppen bestimmt.

Die Erfindung wird anhand der folgenden Beispiele weiter beschrieben.

### Beispiele

### Generell:

Die folgenden Siliconpolymere wurden in den Beispielen eingesetzt.

### Polymer A:

Ein Trimethylsiloxy-endgestopptes Polydimethylsiloxan mit einer Viskosität von 5.000 mPa.s bei 25°C.

### Polymer B:

Ein Vinyldimethylsiloxy-endgestopptes Polydimethylsiloxan mit einer Viskosität von 4.500 mPa.s bei 25°C und 0,07 mMol/g Vinylgruppen.

### Polymer C:

Ein Vinyldimethylsiloxy-endgestopptes Dimethylsiloxymethylvinylsiloxy-Copolymer mit einer Viskosität von 4.300 mPa.s bei 25°C und 0,75 mMol/g Vinylgruppen.

### Polymer D:

Ein Trimethylsiloxy-endgestopptes Polymethyl(hydrogen)siloxan mit einer Viskosität von 15 mPa.s bei 25°C und 15 mMol/g Si-H-Gruppen.

### Polymer E:

Ein Trimethylsiloxy-endgestopptes Dimethylsiloxymethyl(hydrogen)siloxy-Copolymer mit einer Viskosität von 30 mPa.s bei 25°C und 4,5 mMol/g Si-H-Gruppen.

### Beispiel 1

In einem 250 ml Polyethylenbecher wurden 45 mg (0,115 Mmol) Palladium(II)(2-ethylhexanoat) in 20 g Polymer B gelöst. Dann wurden 270 mg (1,21 mMol SiH) Polymer E beigemischt und das Gemisch 24 h bei 23°C stehengelassen. Die gelbe Lösung wurde dabei braun. Dann wurden 80 g Polymer C beigemischt. Das Produkt wurde als ein hellbraunes Öl erhalten.

Anal.: 120 ppm Pd

Die Wasserstoff-Absorption wurde wie folgt gemessen. Eine Menge von 5 g des Palladium-haltigen Öls wurde zusammen mit einem Magnetrührer in einer 250 ml Einhalskolben vorgelegt. Der Kolben wurde mittels einer Vakuumpumpe evakuiert, mit Wasserstoff befüllt und dann an einer Apparatur zur Messung der Volumenänderung bei Normaldruck angeschlossen. Die Zeitabhängigkeit der Volumenänderung wurde beobachtet. Die Ergebnisse sind in Tabelle 1 aufgeführt.

### Beispiel 2

A) In einem 100 ml Einhalskolben wurden 850 mg (3,8 mMol) Palladium(II)acetat und 1,37 g (9,5 mMol) 2-Ethylhexansäure in 20 g Toluol bei 25°C gelöst. Dann wurden 15 g Polymer A beigemischt und das Toluol bei 60°C und 30 mbar abdestilliert. Man erhält ein rotes Öl mit einem Gehalt von 2,28 Gew.-% Palladium.
B) In einem 250 ml Polyethylenbecher wurden 440 mg (0,094 mMol Pd) des in (A) erhaltenen Öls und 5 g Poylmer B vermischt. Dann wurden 200 mg (0,9 mMol SiH) Polymer E zugegeben und eine Minute mit einem Küchenmixer gemischt. Nach drei Stunden wurde die zuerst gelbe Mischung dunkelbraun. Die Mischung wurde mit 45 g Polymer B und 50 g Polymer C vermischt. Das Produkt wurde als braunes homogenes Öl erhalten.
   Anal.: 100 ppm Pd.
   Das Öl weist eine starke Lichtsreuung auf, die auf eine sehr feindisperse Verteilung des Palladiums in Form kolloidaler Partikel hinweist. Durch Untersuchung mittels Lichtmikroskopie und mittels konfokaler Laserscanmikroskopie wurden keine Partikel mit einer Teilchengröße von mehr als 0,2 µm Durchmesser gefunden.
C) In einem 250 ml Polyethylenbecher wurden 2,2 g (0,47 mMol Pd) des in (A) erhaltenen Öls und 25 g Poylmer B vermischt. Dann wurden 1,0 mg (4,5 mMol SiH) Polymer E zugegeben und eine Minute gemischt. Nach drei Stunden wurdem weitere 5 g Polymer B und 50 g Polymer C eingemischt. Das Produkt wurde als ein dunkelbraunes homogenes Öl erhalten.
   Anal.: 670 ppm Pd.
D) In einem 250 ml Polyethylenbecher wurden 550 mg (0,125 mMol Pd) des in (A) erhaltenen Öls und 5,6 g Poylmer B vermischt. Dann wurden 275 mg (1,15 mMol) SiH) Polymer E beigemischt. Nach 1 h bei 23°C wurden 93,5 g Polymer B beigemischt. Das Produkt wurde als braunes homogenes Öl erhalten.
   Anal.: 130 ppm Pd.
E) In einem 250 ml Einhalskolben wurden 440 mg (0,094 mMol Pd) des in (A) erhaltenen Öls und 5 g Poylmer A vermischt. Das Gemisch wurde dann 66 Stunden bei 25°C in einer H₂-Atmosphäre reduziert. Dabei wurden 40 ml H₂ aufgenommen. Anschließend wurden 95 g Polymer C eingemischt. Das Produkt wurde als dunkelgraues Öl erhalten. Beim Stehen bildete sich ein feiner schwarzer Niederschlag.
   Anal.: 50 ppm Pd.

Die Wasserstoff-Absorption von (b), (c), (d) und (e) wurde wie in Beispiel 1 gemessen. Die Ergebnisse sind in Tabelle 1 aufgeführt.

### Beispiel 3

In einem 250 ml Dreihalskolben mit Rührer und Wasserkühler wurden 46,5 g Polymer B, 50 g Polymer C und 3,5 g eine pyrogene Kieselsäure mit einer spezifischen Oberfläche von 150 m²/g vermischt. Dann wurden 0,1 g (0,45 mMol) 3-Aminopropyltriethoxysilan zugegeben und 1,5 h bei 25°C und 15 min bei 60°C und 30 mbar gerührt. Eine Lösung von 27 mg (0,12 mMol) Palladium(II)acetat in 5 g Toluol wurde hergestellt und zugegeben. Nach 15 min wurden 20 mg (0,3 mMol SiH) Polymer D zugegeben und 3 h bei 60°C gerührt. Das Toluol wurde bei 60°C und 30 mbar abdestilliert. Das Produkt wurde als eine trübe graue Paste erhalten.

Anal.: 180 ppm Pd

Die Wasserstoff-Absorption wurde wie in Beispiel 1 gemessen. Die Ergebnisse sind in Tabelle 1 aufgeführt.

### Beispiel 4

A) In einem 500 ml Einhalskolben wurden 9 g (40 mMol) Palladium(II)acetat in 150 ml Toluol gelöst. Dann wurden 120 g eines Polydimethylsiloxans mit 0,82 mMol/g (Cyclohexylamino)methyldimethylsiloxy-Gruppen und einer Viskosität von 55 mPa.s (25°C) zugegeben. Nach 2 Stunden wurde das Toluol bei 30°C und 1 mbar abgezogen. Man erhält ein hellbraunes Öl mit einer Viskosität von 650 mPa.s bei 25°C und 3,14 Gew.-% Palladium in einer Menge von 130 g.
B) In einem 250 ml Poylethylenbecher wurden 320 mg (0,1 mMol) des in (A) erhaltenes Öls mit 20 g Polymer B gemischt. Dann wurden 260 mg (1,1 Mmol SiH) Polymer E beigemischt und das Gemisch 3 Tage bei 60°C stehengelassen. Dann wurden 80 g Polymer C beigemischt. Das Produkt wurde als ein hellbraunes homogenes Öl erhalten .
   Anal.: 100 ppm Pd
   Die Wasserstoff-Absorption wurde wie in Beispiel 1 gemessen. Die Ergebnisse sind in Tabelle 1 aufgeführt.

### Beispiel 5 (Vergleichsbeispiel ohne Reduktion)

Eine Palladium-haltige Silikonzusammensetzung wurde hergestellt, indem man eine Palladium(II)-Verbindung im Siliconpolymer löste aber nicht reduzierte.

In einem 500 ml Polyethylenbecher wurden 480 mg (0,1 mMol Pd) des in 3 (A) erhaltenen Öls mit 50 g Polymer B und 50 g Polymer C vermischt. Das Produkt wurde als hellgelbes homogenes Öl erhalten.

Anal.: 120 ppm Pd

Die Wasserstoff-Absorption wurde wie in Beispiel 1 gemessen. Die Ergebnisse sind in Tabelle 1 aufgeführt.

### Beispiel 6 (Vergleichsbeispiel mit Palladium auf Kohle)

In einem 250 ml Polyethylenbecher wurden 50 g Polymer B und 50 g Polymer C mit 200 mg Palladium auf Aktivkohle, welches eine Konzentration von 5 g Palladium je 100 g Aktivkohle besitzt, vermischt. Das Gemisch wurde als ein schwarzes Öl erhalten.

Die Wasserstoff-Absorption wurde wie in Beispiel 1 gemessen. Die Ergebnisse sind in Tabelle 1 aufgeführt. Dabei wird ersichtlich das im Vergleich zu Beispiel 2 (B) sowie 3 bei gleichem SiVi-Gehalt weniger ml H₂/g sowie im Vergleich zu 3(B) bei gleicher Palladiumkonzentration weniger ml H₂/Mol Pd sec absorbiert wird.

**Tabelle 1**

| Wasserstoff-Absorption bei 1.000 mbar H₂ und 25°C | | | | | | |
|---|---|---|---|---|---|---|
| Beispiel | ppm Pd | mMol/g SiVi^{a} | ml H₂/Mol Pd-sec^{b} | ml/H₂/g | | |
| | | | | 1 h | 3 h | 24 h |
| 1 | 120 | 0,615 | 1520 | 6,2 | 11,9 | -^{e} |
| 2B | 100 | 0,41 | 1420 | 4,8 | 7,3 | 12 |
| 2C | 670 | 0,49 | 255 | 5,8 | 9,0 | - |
| 2D | 130 | 0,07 | 432 | 1,9 | 2,4 | - |
| 2E | 50 | 0,71 | 709 | 1,2 | 2,6 | 6,2 |
| 3 | 180 | 0,41 | 394 | 2,4 | 3,5 | - |
| 4 | 100 | 0,615 | 440 | 1,5 | 3,8 | - |
| 5^{c} | 120 | 0,41 | 0 | 0 | o^{d} | - |
| 6^{f} | 100 | 0,41 | 355 | 1,2 | 2,82 | 4,3 |

| | | | | | | |
|---|---|---|---|---|---|---|
| ^{a} gerechnet vom Polymergemisch, | | | | | | |
| ^{b} nach 1 h, | | | | | | |
| ^{c} Vergleichsbeispiel, in dem die Palladium(II)-Verbindung nicht reduziert wurde, | | | | | | |
| ^{d} nach 3 h keine nachweisbare Wasserstoff-Adsorption, | | | | | | |
| ^{e} -: keine Messung, | | | | | | |
| ^{f} Vergleichsbeispiel mit Pd/C. | | | | | | |

## Patentansprüche

1. Palladium-haltige wasserfreie Polymere mit einem Gehalt an Palladium in kolloidaler Verteilung, wobei mindestens 50 Gew.-% des Palladiums in Form kolloidaler Partikel mit einer Teilchengröße von weniger als 0,5 µm Durchmesser vorliegt und worin die Polymere gegebenenfalls Vinyl- oder Alkylgruppen-haltige Polyolefine und/oder Siliconpolymere sind.

2. Wasserstoff-absorbierende Polymerzusammensetzung gekennzeichnet durch einen Gehalt von mindestens 0,2 mMol/100 g an ungesättigten Gruppen, und einen Gehalt an Palladium in kolloidaler Verteilung, wobei mindestens 50 Gew.-% des Palladiums in Form kolloidaler Partikel mit einer Teilchengröße von weniger als 0,5 µm Durchmesser vorliegt.

3. Verfahren zur Herstellung der Polymere nach Anspruch 1, dadurch gekennzeichnet, daß man eine Pd-Verbindung in dem Polymeren löst und anschließend die Pd-Verbindung in dem Polymeren reduziert.

4. Verfahren nach Anspruch 3, dadurch gekennzeichnet, daß man eine Palladium(II)verbindung der Formel
PdX₂
worin X = Cl, Br, O₂CR oder 2,4-pentandionato Gruppen sind und R ein C-1 bis C-20 organischer Rest ist, einsetzt.

5. Verfahren nach einem der Ansprüche 3 oder 4, dadurch gekennzeichnet, daß man die Palladium(II)verbindung zusammen mit einer reaktionsfähigen Verbindung, die mindestens eine Carboxyl- bzw. primäre, sekundäre oder tertiäre Aminogruppe enthält, in einem oder mehreren Polymer(en) löst.

6. Verfahren nach einem der Ansprüche 3 bis 5, dadurch gekennzeichnet, daß man die im Polymer gelöste Palladium(II)verbindung mit Wasserstoff oder mit einer Si-H-haltigen Verbindung, die zumindest ein Wasserstoffatom an ein Siliziumatom gebunden enthält, unter solchen Bedingungen miteinander umsetzt, daß zumindest ein Teil der Palladium(II)verbindung reduziert wird.

7. Verfahren nach einem der Ansprüche 3 bis 6, dadurch gekennzeichnet, daß man mindestens ein Siliconpolymer der allgemeinen Formel 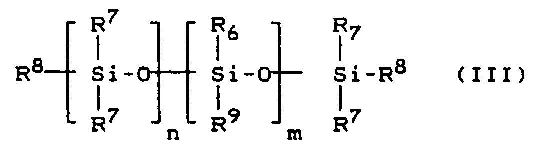 worin R⁶ und R⁷ unabhängig voneinander Methyl, Ethyl, oder Phenyl, R⁸ und R⁹ unabhängig voneinander Methyl, Vinyl, Allyl oder Phenyl, n = 0 bis 2000 und m = 0 bis 1000 und n + m = 300 bis 2000 sind, einsetzt.

8. Verfahren zur Herstellung Wasserstoff-absorbierender Polymerzusammensetzungen nach Anspruch 2, dadurch gekennzeichnet, daß man Palladium-haltige Polymere nach einem der Ansprüche 1 und 3 bis 7, mit ungesättigten Gruppen enthaltenden Polymeren vermischt.

9. Verfahren nach Anspruch 8, dadurch gekennzeichnet, daß man mindestens ein ungesättigte Gruppen enthaltendes Siliconpolymer der allgemeinen Formel (III) 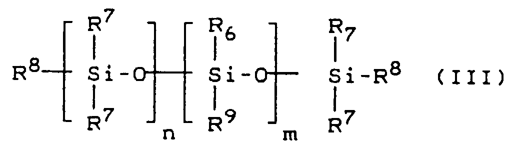 worin R⁶ und R⁷ unabhängig voneinander Methyl, Ethyl, oder Phenyl, R⁸ und R⁹ unabhängig voneinander Methyl, Vinyl, Allyl oder Phenyl, n = 0 bis 2000 und m = 0 bis 1000 und n + m = 300 bis 2000 sind und das Polymer oder Polymergemisch ein Gehalt von insgesamt mindestens 0,2 mMol/100 g ungesättigte Gruppen aufweist, einsetzt.

## Claims

1. Palladium-containing anhydrous polymers with a concentration of colloidally distributed palladium, wherein at least 50 wt.% of the palladium is present in the form of colloidal particles with a particle diameter of less than 0.5 µm and wherein the polymers are optionally polyolefins which contain vinyl or alkyl groups and/or silicone polymers.

2. Hydrogen-absorbing polymer composition characterised by a concentration of at least 0.2 mmol/100 g of unsaturated groups, and a concentration of colloidally distributed palladium, wherein at least 50 wt.% of the palladium is present in the form of colloidal particles with a particle diameter of less than 0.5 µm.

3. Process for preparing polymers according to Claim 1, characterised in that a Pd compound is dissolved in the polymer and then the Pd compound is reduced in the polymer.

4. Process according to Claim 3, characterised in that a palladium(II) compound of the formula
PdX₂
in which X represents Cl, Br, O₂CR or a 2,4-pentanedionato group and R is a C₁ to C₂₀ organic group.

5. Process according to one of Claims 3 or 4, characterised in that the palladium(II) compound is dissolved in one or more polymer(s) together with a reactive compound which contains at least one carboxyl or primary, secondary or tertiary amino group.

6. Process according to one of Claims 3 to 5, characterised in that the palladium(II) compound dissolved in the polymer is reacted with hydrogen or with a Si-H-containing compound which contains at least one hydrogen atom bonded to a silicon atom, under conditions such that at least some of the palladium(II) compound is reduced.

7. Process according to one of Claims 3 to 6, characterised in that at least one silicone polymer of the general formula 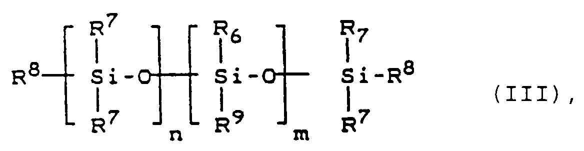 in which R⁶ and R⁷, independently of each other, represent methyl, ethyl or phenyl, R⁸ and R⁹, independently of each other represent methyl, vinyl, allyl or phenyl, n = 0 to 2000 and m = 0 to 1000 and n + m = 300 to 2000, is used.

8. Process for preparing hydrogen-absorbing polymer compositions according to Claim 2, characterised in that palladium-containing polymers according to one of Claims 1 and 3 to 7 are mixed with polymers containing unsaturated groups.

9. Process according to Claim 8, characterised in that at least one silicone polymer containing unsaturated groups, of the general formula (III) 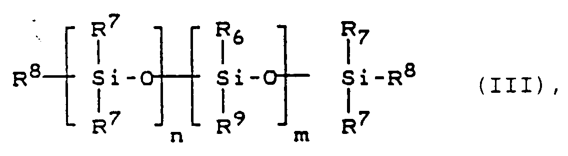 in which R⁶ and R⁷, independently of each other, represent methyl, ethyl or phenyl, R⁸ and R⁹, independently of each other, represent methyl, vinyl, allyl or phenyl, n = 0 to 2000 and m = 0 to 1000 and n + m = 300 to 2000 and the polymer or polymer mixture has a total concentration of unsaturated groups of at least 0.2 mmol/100 g, is used.

## Revendications

1. Polymères anhydres contenant du palladium, qui contiennent du palladium à un état divisé colloïdal, au moins 50 % en masse du palladium étant sous forme de particules colloïdales ayant un diamètre de particules inférieur à 0,5 µm, et les polymères étant des polyoléfines et/ou des polymères silicones contenant éventuellement des groupes vinyle ou alkyle.

2. Composition de polymères absorbant l'hydrogène, caractérisée en ce qu'elle contient au moins 0,2 mmol/100 g de groupes insaturés et en ce qu'elle contient du palladium à un état divisé colloïdal, au moins 50 % en masse du palladium étant sous forme de particules colloïdales ayant un diamètre de particules inférieur à 0,5 µm.

3. Procédé de préparation des polymères selon la revendication 1, caractérisé en ce que l'on dissout un composé de Pd dans le polymère et on réduit ensuite le composé de Pd dans le polymère.

4. Procédé selon la revendication 3, caractérisé en ce que l'on utilise un composé de palladium(II) de formule
PdX₂
dans laquelle X peut être choisi parmi les groupes Cl, Br, O₂CR ou 2,4-pentanedionato et R représente un reste organique de 1 à 20 atomes de carbone.

5. Procédé selon l'une des revendications 3 ou 4, caractérisé en ce que l'on dissout dans un ou plusieurs polymères le composé de palladium(II) en même temps qu'un composé réactif qui contient au moins un groupe carboxyle ou amino primaire, secondaire ou tertiaire.

6. Procédé selon l'une des revendications 3 à 5, caractérisé en ce que l'on fait réagir le composé de palladium(II) dissous dans le polymère avec de l'hydrogène ou avec un composé contenant des groupes Si-H, qui contient au moins un atome d'hydrogène lié à un atome de silicium, dans des conditions telles que le composé de palladium(II) est au moins partiellement réduit.

7. Procédé selon l'une des revendications 3 à 6, caractérisé en ce que l'on utilise au moins un polymère silicone de formule générale 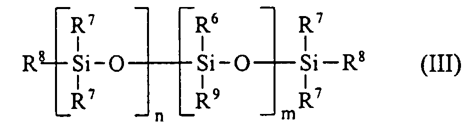 dans laquelle
R⁶ et R⁷ représentent indépendamment l'un de l'autre un reste méthyle, éthyle ou phényle,
R⁸ et R⁹ représentent indépendamment l'un de l'autre un reste méthyle, vinyle, allyle ou phényle,
n = 0 à 2 000,
m = 0 à 1 000 et
m+n = 300 à 2 000.

8. Procédé de préparation de compositions de polymères absorbant l'hydrogène selon la revendication 2, caractérisé en ce que l'on mélange des polymères contenant du palladium selon l'une des revendications 1 et 3 à 7 avec des polymères contenant des groupes insaturés.

9. Procédé selon la revendication 8, caractérisé en ce que l'on utilise au moins un polymère silicone contenant des groupes insaturés de formule générale (III) 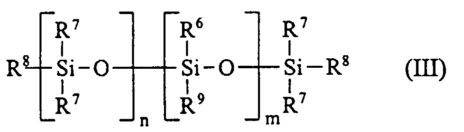 dans laquelle
R⁶ et R⁷ représentent indépendamment l'un de l'autre un reste méthyle, éthyle ou phényle,
R⁸ et R⁹ représentent indépendamment l'un de l'autre un reste méthyle, vinyle, allyle ou phényle,
n = 0 à 2 000,
m = 0 à 1 000 et
m + n = 300 à 2 000,
le polymère ou le mélange de polymères ayant une teneur totale en groupes insaturés d'au moins 0,2 mmol/100 g.
